# FASCICULE DE BREVET EUROPEEN

(11) **EP 1 133 422 B1**
(45) Date de publication et mention de la délivrance du brevet: **09.02.2005**
(21) Numéro de dépôt: 99956154.1
(22) Date de dépôt: 26.11.1999
(51) Int. Cl.: B60S 1/52, B60S 1/58

(54) **INSTALLATION DE LAVAGE DE VITRE ARRIERE POUR VEHICULE AUTOMOBILE**
WASCHVORRICHTUNG FÜR KRAFTFAHRZEUGHECKSCHEIBE
VEHICLE REAR WINDOW WASHING INSTALLATION

(30) Priorité: 27.11.1998 FR 9814955
(43) Date de publication de la demande: 19.09.2001
(73) Titulaire: Renault s.a.s., 92100 Boulogne Billancourt (FR); Adam Opel AG, 65423 Rüsselsheim (DE)
(72) Inventeur: BURBAN, Jean-Luc, F-78410 Aubergenville (FR)
(74) Mandataire: Srour, Elie
(86) Numéro de dépôt international: PCT/FR1999/002927
(87) Numéro de publication internationale: WO 2000/032454

(56) Documents cités:
- DE-A- 19 501 210
- GB-A- 1 376 590
- US-A- 2 968 071
- US-A- 5 403 060

## Description

La présente invention concerne une installation de lavage de vitre arrière de véhicule automobile, et plus particulièrement de véhicule automobile pouvant présenter différentes configurations d'ouverture de portes arrière en fonction de son utilisation.

On connaît de manière générale des véhicules automobiles munis d'installation de lavage, destinée à la vitre arrière, où les gicleurs sont placés sur les ouvrants de la partie arrière.

Cette disposition pose de nombreux problèmes en ce qui concerne les passages de la tuyauterie d'alimentation en liquide lave-glace vers les gicleurs. En effet, les solutions à apporter sont complexes et nécessitent d'être réadaptées en fonction de chaque type d'ouvrant, par exemple pour un ouvrant arrière de type hayon ou pour un ouvrant arrière de type portes battantes. De plus, le montage de ces installations de lavage est relativement long. Ainsi, la coexistence de solutions différentes pour chaque sorte de véhicule entraîne une dépense supplémentaire quant à leur coût de fabrication.

Selon une autre disposition connue, les gicleurs de l'installation de lavage de la vitre arrière peuvent être situés en partie supérieure du véhicule, dans une partie de carrosserie prolongeant le pavillon de ce dernier. On s'affranchit ainsi de l'adaptation des solutions pour l'alimentation en liquide lave-glace en fonction du type d'ouvrant arrière présent sur le véhicule. Cependant, cette solution reste inutilisable quand on veut disposer d'un ouvrant arrière supplémentaire, de type girafon, occupant une partie arrière du pavillon, comme il est prévu, par exemple, sur le modèle Kangoo de la demanderesse. Dans ce cas, la solution précédemment citée n'est pas envisageable, compte-tenu de sa disposition du circuit d'alimentation en liquide lave-glace.

Le document DE-A-19501210 décrit un module d'essuyage et lavage pour pare-brise de véhicule. Dans un mode de réalisation, le cadre du module, adapté à être monté sur la caisse du véhicule, comprend une pluralité de gicleurs.

La présente invention a pour objet de remédier à ces inconvénients en proposant une installation de lavage de vitre arrière utilisable quel que soit le type d'ouvrant arrière du véhicule.

La présente invention a également pour objet de proposer une installation de lavage de vitre arrière qui permet de nombreuses configurations d'ouverture de la partie arrière du véhicule.

L'invention a aussi pour objet de proposer une installation de lavage de vitre arrière dont le montage des gicleurs nécessite un minimum de temps.

L'invention a donc trait à une installation de lavage de vitre du type divulgué dans DE-A-19501210 caractérisée en ce que la vitre est une vitre d'un ouvrant arrière du véhicule et en ce que lesdits gicleurs sont disposés sur des montants arrière faisant partie de la structure du véhicule et situés de part et d'autre dudit ouvrant arrière.

Selon un mode de réalisation de l'invention, les gicleurs sont portés par des enjoliveurs fixés sur les montants arrière du véhicule.

Selon un autre mode de réalisation de l'invention, les gicleurs sont clipsés sur les enjoliveurs.

Selon un autre mode de réalisation de l'invention, les gicleurs et les enjoliveurs sont moulés d'une seule pièce.

Selon un autre mode de réalisation de l'invention, les gicleurs, fixés dans une cavité des enjoliveurs, affleurent à la surface de ces derniers.

Selon un autre mode de réalisation de l'invention, les enjoliveurs possèdent des orifices par lesquels les gicleurs, fixés à l'intérieur de ces enjoliveurs, aspergent la vitre arrière .

Selon un autre mode de réalisation de l'invention, les gicleurs sont reliés à un ensemble réservoir et alimentation en liquide de lave-glace situé dans le bloc avant du véhicule par un circuit d'alimentation reliant lesdits gicleurs et ledit ensemble réservoir et alimentation.

D'autres avantages et caractéristiques de l'invention seront mis en évidence dans la description qui suit, donnée à titre d'exemple, en référence aux dessins annexés sur lesquels :

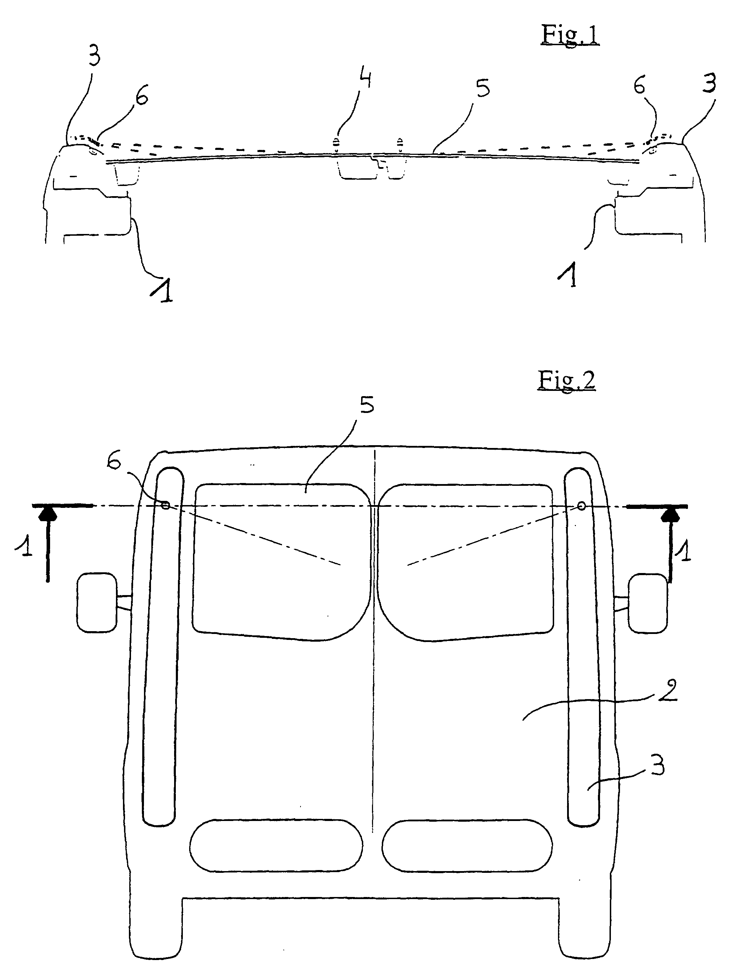

- la figure 1 est une section selon 1-1 de la partie arrière d'un véhicule automobile équipé de l'installation de lavage selon l'invention.
- la figure 2 est une vue de face de la partie arrière d'un véhicule automobile équipé de l'installation de lavage selon l'invention.

Des montants arrière 1 faisant partie de la structure du véhicule, situés de part et d'autre des ouvrants arrière 2, sont recouverts, dans un souci d'esthétique, par des enjoliveurs de montants arrière 3. Ces enjoliveurs ont sensiblement une forme de cornière et s'étendent de part et d'autre des ouvrants arrière 2, tout le long des montants arrière 1 sur lesquels ils sont fixés. A titre d'exemple, les enjoliveurs 3 sont réalisés en matière plastique moulée. Des balais d'essuie-vitre 4 sont portés par les ouvrants arrière 2 et viennent nettoyer la vitre arrière 5 du véhicule.

Avantageusement, des gicleurs 6, destinés à projeter sur la vitre arrière 5 un liquide lave-glace utilisé par la suite par les balais d'essuie-vitre 4, sont fixés sur les enjoliveurs 3.

Dans un exemple de réalisation, les gicleurs 6 sont clipsés sur les enjoliveurs 3 et pointent donc à l'extérieur de ces derniers. Ce type de montage permet de réduire au maximum le temps de montage nécessaire à la pose des gicleurs sur les enjoliveurs de montants arrière.

Dans un autre exemple de réalisation, les gicleurs 6 et les enjoliveurs 3 sont moulés d'une seule pièce. On évite alors l'opération de montage des gicleurs, seul leur raccordement au système d'alimentation en liquide lave-glace est nécessaire.

Dans un autre exemple de réalisation, les enjoliveurs 3 possèdent une cavité dans laquelle est fixé, de manière connue, le gicleur 6. Le gicleur affleure alors la surface de l'enjoliveur. Cette disposition améliore l'aspect esthétique de la partie arrière du véhicule.

Dans un autre exemple de réalisation, les enjoliveurs 3 possèdent un orifice. Les gicleurs 6 sont fixés, de manière connue, à l'intérieur des enjoliveurs et aspergent, par l'orifice de ces derniers, la vitre arrière 5.

Les gicleurs 6 sont reliés, dans un exemple de réalisation, à un ensemble réservoir et alimentation en liquide de lave-glace situé dans le bloc avant du véhicule. Le circuit d'alimentation relie les gicleurs et l'ensemble réservoir et alimentation en passant sous le plancher du véhicule, en suivant le circuit de freinage, selon une disposition connue.

Dans un autre exemple de réalisation, les gicleurs sont reliés à l'ensemble réservoir et alimentation par l'intermédiaire d'un circuit passant le long du capot, puis des montants de pare-brise et enfin des brancards de pavillon du véhicule.

L'installation de lavage selon l'invention dispose donc d'un grand nombre d'exemples de réalisation dont tous permettent le montage rapide dudit dispositif sur tout type de partie arrière de véhicule automobile.

De cette manière, les gicleurs 6 sont portés par des éléments qui demeurent fixes quel que soit le type d'ouvrants arrière dont dispose le véhicule mais également quelle que soit la configuration adoptée par ces ouvrants. L'installation de lavage de vitre arrière selon l'invention permet donc l'utilisation d'un seul type de gicleurs mais aussi l'uniformisation du montage de ceux-ci, quel que soit le véhicule monté. L'installation de lavage selon l'invention permet donc de réduire de manière significative le coût de fabrication des véhicules automobiles qui en sont munis.

L'invention ne se limite pas aux exemples de réalisation précédemment cités mais englobe tout type d'installation de lavage de vitres arrière dont les gicleurs sont portés par les montants arrière du véhicule.

## Revendications

1. Installation de lavage de vitre (5) pour véhicule automobile, comportant des gicleurs (6) de projection de liquide lave-glace disposés sur des éléments du véhicule situés latéralement à ladite vitre (5),
**caractérisée en ce que** ladite vitre (5) est une vitre d'un ouvrant arrière (2) du véhicule et **en ce que** lesdits gicleurs (6) sont disposés sur des montants arrière (1) faisant partie de la structure du véhicule et situés de part et d'autre dudit ouvrant arrière (2).

2. Installation de lavage selon la revendication 1, **caractérisée en ce que** les gicleurs (6) sont portés par des enjoliveurs (3) fixés sur lesdits montants arrière (1) du véhicule.

3. Installation de lavage selon la revendication 2, **caractérisée en ce que** lesdits enjoliveurs (3) ont sensiblement une forme de cornière et s'étendent de part et d'autre dudit ouvrant arrière (2).

4. Installation de lavage selon l'une quelconque des revendications 2 ou 3, **caractérisée en ce que** lesdits enjoliveurs (3) s'étendent tout le long des montants arrière (1) sur lesquels ils sont fixés.

5. Installation de lavage selon l'une quelconque des revendications 2 à 4, **caractérisée en ce que** les gicleurs (6) sont clipsés sur les enjoliveurs (3).

6. Installation de lavage selon l'une quelconque des revendications 2 à 4, **caractérisée en ce que** les gicleurs (6) et les enjoliveurs (3) sont moulés d'une seule pièce.

7. Installation de lavage selon l'une quelconque des revendications 2 à 5, **caractérisée en ce que** les gicleurs (6), fixés dans une cavité des enjoliveurs (3), affleurent à la surface desdits enjoliveurs (3).

8. Installation de lavage selon l'une quelconque des revendications 2 à 5, **caractérisée en ce que** les enjoliveurs (3) possèdent des orifices par lesquels les gicleurs (6), fixés à l'intérieur desdits enjoliveurs (3), aspergent ladite vitre arrière (5).

9. Installation de lavage selon l'une quelconque des revendications 1 à 8, caractérisée en ce les gicleurs (6) sont reliés à un ensemble réservoir et alimentation en liquide de lave-glace situé dans le bloc avant du véhicule par un circuit d'alimentation reliant lesdits gicleurs (6) et ledit ensemble réservoir et alimentation.

10. Installation de lavage selon l'une quelconque des revendications 1 à 9, **caractérisée en ce que** ledit ouvrant (2) est un ouvrant de type portes battantes.

11. Installation de lavage selon la revendication 10, **caractérisée en ce que** ledit ouvrant (2) comporte un girafon, occupant une partie arrière d'un pavillon du véhicule.

12. Installation de lavage selon l'une quelconque des revendications 1 à 9, **caractérisée en ce que** ledit ouvrant (2) est un ouvrant de type hayon.

## Patentansprüche

1. Waschvorrichtung von Fenstern (5) für ein Kraftfahrzeug, umfassend Spritzdüsen (6) zum Spritzen von Wischflüssigkeit, welche auf Elementen des Fahrzeugs angeordnet sind, die seitlich zu der Scheibe (5) liegen, **dadurch gekennzeichnet, dass** die Scheibe (5) eine Scheibe eines hinteren Türflügels (2) des Fahrzeugs ist und dadurch, dass die Spritzdüsen (6) auf hinteren Säuten (1) angeordnet sind, die Teil des Fahrzeugaufbaus sind und auf beiden Seiten des hinteren Türflügels (2) liegen.

2. Waschvorrichtung gemäß Anspruch 1. **dadurch gekennzeichnet, dass** die Spritzdüsen (6) durch Zierleisten (3) getragen werden, welche auf den hinteren Säulen (1) des Fahrzeugs befestigt sind.

3. Waschvorrichtung gemäß Anspruch 2. **dadurch gekennzeichnet, dass** die Zierleisten (3) deutlich die Form eines Winkelprofils besitzen und sich beiderseits des hinteren Türflügels (2) erstrecken.

4. Waschvortichtung gemäß einem der Ansprüche 2 oder 3, **dadurch gekennzeichnet, dass** die Zierleisten (3) sich über die gesamte Länge der hinteren Säulen (1) erstrecken, auf welchen sie befestigt sind.

5. Waschvorrichtung gemäß einem der Ansprüche 2 bis 4, **dadurch gekennzeichnet, dass** die Spritzdüsen (6) auf die Zierleisten (3) geklippt werden.

6. waschvorrichtung gemäß einem der Ansprüche 2 bis 4, dadurch gekannzeichnet, dass die Spritzdüsen (6) und die Zierleiste (3) aus einem einzigen Stück geformt sind.

7. Waschvorrichtung gemäß einem der Ansprüche 2 bis 5, **dadurch gekennzeichnet, dass** die Spritzdüsen (6), befestigt in einer Vertiefung der Zierleiste (3), auf gleiche Höhe liegen wie die Oberfläche der Zierleiste (3).

8. Waschvortichtung gemäß einem der Ansprüche 2 bis 5, **dadurch gekennzeichnet, dass** die Zierleisten (3) Öffnungen besitzen, durch welche die Spritzdüsen (6), befestigt auf der Innenseite der Zierleisten (3), die hintere Scheibe (5) besprühen.

9. Waschvorrichtung gemäß einem der Ansprüche 1 bis 8, **dadurch gekennzeichnet, dass** die Spritzdüsen (6) mit einem Ensemble aus Tank und Versorgung mit Wischflüssigkeit verbunden sind, das in dem vorderen Block des Fahrzeugs liegt, über eine Vezsorgungsleitung, weiche die Spritzdüsen (6) und das Ensemble aus Tank und Versorgung verbindet.

10. Waschvorrichtung gemäß einem der Ansprüche 1 bis 9, **dadurch gekennzeichnet, dass** der Türflügel (2) ein Türflügel vom Typ Pendeltür ist.

11. Waschvotrichtung gemäß Anspruch 10, **dadurch gekennzeichnet, dass** der Türflügel (2) eine Dachluke aufweist, welche in einem hinteren Bereich eines Fahrzeugdachs liegt.

12. Waschvorrichtung gemäß einem der Ansprüche 1 bis 9, **dadurch gekennzeichnet. dass** der Türflügel (2) ein Türflügel vom Typ Heckklappe ist

## Claims

1. Window (5) washer system for a motor vehicle, comprising washer fluid spray jets (6) arranged on components of the vehicle positioned laterally to the aforementioned window (5), **characterised in that** the aforementioned window (5) is a window in a rear vent (2) on the vehicle and the aforementioned washer jets (6) are arranged on rear pillars (1) forming part of the vehicle structure and located on either side of the aforementioned rear vent (2).

2. Washer system according to claim 1, **characterised in that** the washer jets (6) are held by trim mouldings (3) fixed to the aforementioned rear pillars (1) of the vehicle.

3. Washer system according to claim 2, **characterised in that** the aforementioned trim mouldings (3) are approximately cornice-shaped and extend on either side of the aforementioned rear vent (2).

4. Washer system according to either claim 2 or 3, **characterised in that** the aforementioned trim mouldings (3) extend along the entire length of the rear pillars (1) to which they are fixed.

5. Washer system according to any one of claims 2 to 4, **characterised in that** the washer jets (6) are cupped onto the trim mouldings (3).

6. Washer system according to any one of claims 2 to 4, **characterised in that** the washer jets (6) and the trim mouldings (3) are moulded in one piece.

7. Washer system according to any one of claims 2 to 5, **characterised in that** the washer jets (6), fixed in a cavity in the trim mouldings (3), are flush with the surface of the aforementioned trim mouldings (3).

8. Washer system according to any one of claims 2 to 5, **characterised in that** the trim mouldings (3) have orifices through which the washer jets (6), fixed inside the aforementioned trim mouldings (3), spray the aforementioned rear window (5).

9. Washer system according to any one of claims 1 to 8, **characterised in that** the washer jets (6) are connected to a washer reservoir and supply unit located in the front end of the vehicle by a supply circuit connecting the aforementioned washer jets (6) and the aforementioned reservoir and supply unit.

10. Washer system according to any one of claims 1 to 9, **characterised in that** the aforementioned vent (2) is a wing door type vent.

11. Washer system according to claim 10, **characterised in that** the aforementioned vent (2) comprises a roof flap occupying a rear part of a vehicle roof.

12. Washer system according to any one of claims 1 to 9, **characterised in that** the aforementioned vent (2) is a tailgate type vent.
